# EUROPÄISCHE PATENTANMELDUNG

(11) **EP 1 086 884 A1**
(43) Veröffentlichungstag der Anmeldung: **28.03.2001**
(21) Anmeldenummer: 99810850.0
(22) Anmeldetag: 22.09.1999
(51) Int. Cl.: B62D 31/02, B60K 5/10, B62D 33/06

(54) **Fahrzeug für Lasten- und Personentransporte**

(71) Anmelder: Alusuisse Technology & Management AG, 8212 Neuhausen am Rheinfall (CH)
(72) Erfinder: Röllin, Ulrich, 8048 Zürich (CH); Streiff, Samuel, 5210 Windisch (CH)

(57) **Zusammenfassung**

Fahrzeug für Lasten- und Personentransporte enthaltend einen Fahrerhausbereich und einen Nutzlast- oder Personentransportanbau. Das Fahrzeug (1) weist einen Aufbau aus gesonderten, gegenseitig aneinander gefügten Moduleinheiten (2, 3, 4) auf. Diese umfassen eine Kabinenmoduleinheit (2), eine daran anschliessende Antriebsmoduleinheit (3) und eine nachfolgende Lastentragmoduleinheit (4), enthaltend wenigstens eine hintere Achse (23), einen Fahrgestellrahmen und einen Aufbau (33). Die Antriebsmoduleinheit (3) enthält eine Antriebseinheit (13) und eine vordere Achse (22) sowie ein oder mehrere Querträger (5a, 5b), welche über Federungen auf die vordere Achse gestützt sind. Die Querträger (5a, 5b) bestehen aus Ein- oder Mehrkammerhohlprofile, vorzugsweise Strangpressprofile aus Aluminium. Die Antriebseinheit (13) ist über der vorderen Achse (22) angeordnet und über Federelemente (9) auf einem oder mehreren Querträgern (5a, 5b) oder auf Zwischenbauteilen an den Querträgern (5a, 5b) befestigt. Die Fahrerhaus- (2) und/oder Lastentragmoduleinheit (4) sind über Verbindungsschnittstellen oder Kupplungsvorrichtungen am Querträger (5a, 5b) mit der Antriebsmoduleinheit (3) verbunden.

## Beschreibung

Vorliegende Erfindung betrifft ein Fahrzeug für Lasten- und/oder Personentransporte enthaltend einen Fahrerhausbereich und einen Nutzlast- oder Personentransportanbau.

Fahrzeuge, insbesondere Strassenfahrzeuge, wie Busse, Omnibusse, Lastkraftwagen (Lkw) etc., weisen unabhängig von ihrer Bauart üblicherweise ein Fahrgestell auf, dessen Rahmen aus zwei mit ihrer Oberkante in einer horizontalen Ebene liegenden, lastentragenden Längsträgern besteht, die über mehrere Querträger, insbesondere an ihrem vorderen und hinteren Abschluss, verbunden sind. Der Fahrgestellrahmen ist in der Regel durchgehend und erstreckt sich vom vorderen Ende des Fahrerhauses über die Vorder- und Hinterachsen bis hin zum Fahrzeugende, wobei der Rahmen im hinteren Fahrzeugabschnitt einen Aufbau aufnehmen kann. Die Querträger dienen einerseits zur Versteifung des Rahmens und andererseits auch zur Aufnahme von Komponenten, wie Stossdämpfer oder Getriebeaufhängung. Auf die Querträger werden jedoch in der Regel keine Haupttraglasten abgestützt.

Der Fahrgestellrahmen und insbesondere dessen Längsträger, trägt unter anderem den Fahrzeugaufbau und die Antriebseinheit. Er ist über Federvorrichtungen mit den Achsen bzw. Radaufhängungsorganen verbunden. Die Antriebseinheit ist dabei vor, zwischen oder hinter den Achsen angeordnet und über Dämpfungselemente auf dem Fahrgestellrahmen abgestützt. Der Antrieb auf die Achsen erfolgt in der Regel über eine Kardanwelle und Differentialgetriebe.

Die Querschnittshöhe der beiden Längsträger kann je nach zulässigem Gesamtgewicht des Fahrzeuges bis zu 400 mm betragen. Die Masse der Längsträger ist daher gross, so dass diese in erheblichem Masse zum Leergewicht des Fahrzeuges beitragen.

Bei Fahrzeugen der beschriebenen Art stellt der Fahrgestellrahmen eine zentrale Baueinheit dar, an welcher unter anderem Fahrerhaus, Aufbau sowie Achsen, Antriebsstrang, Kraftstofftank, Batterie und Nebenaggregate angebracht und zu einer kompletten Fahrzeugeinheit gefügt sind.

Diese Konstruktion weist den Nachteil auf, dass die Montage der vorgenannten Komponenten primär auf den Fahrgestellrahmen ausgerichtet ist. Dadurch ist man gezwungen aus den einzelnen Komponenten in einem einzigen Montageprozess das komplette Fahrzeug herzustellen, welches anschliessend dem Abnehmer geliefert wird.

Aufgabe vorliegender Erfindung ist ein Fahrzeug für Lasten- und Personentransporte, welches die vorgenannten Nachteile nicht mehr aufweist.

Zur erfindungsgemässen Lösung der Aufgabe führt, dass das Fahrzeug eine Konstruktion aus gesonderten, gegenseitig gefügten Moduleinheiten, enthaltend wenigstens eine Fahrerhausmoduleinheit, wenigstens eine Lastentragmoduleinheit, welche wenigstens eine Achse enthält, und wenigstens eine zwischen einer Fahrerhausmoduleinheit und einer Lastentragmoduleinheit angeordnete Antriebsmoduleinheit, welche eine Antriebseinheit und eine Achse enthält, aufweist. Das Fahrzeug ist vorzugsweise ein strassengebundenes Fahrzeug.

Die Lastentragmoduleinheit entspricht dem Nutzlast- bzw. Personentransportanbau. Die Lastentragmoduleinheit kann somit für Nutzlasttransport und/oder Personentransport konzipiert sein.

In Ausgestaltung der Erfindung ist vorgesehen, dass die Antriebsmoduleinheit ein oder mehrere Querträger enthält und die Antriebseinheit im Bereich einer Achse, vorzugsweise über einer vorderen Achse, angeordnet und vorzugsweise über Federelemente auf einem oder mehreren Querträgern gelagert ist. Es können Mittel zur federnden Abstützung der Querträger auf die Achse vorhanden sein.

Die Fahrerhaus- und/oder Lastentragmoduleinheit können über Verbindungsschnittstellen am Querträger bzw. an den Querträgern, vorzugsweise mittels Kaltverbindungen, mit der Antriebsmoduleinheit verbunden sein.

Der Querträger ist quer zur Fahrzeuglängsrichtung oder Fahrtrichtung angeordnet. Der Querträger ist zweckmässig in einem Winkel von 60° - 90° (Winkelgrade), vorzugsweise von 80°-90° quer zur Fahrzeuglängsrichtung angeordnet. Der Querträger ist als sogenannter Chassisträger ausgebildet, d.h. er ist zentrales Bauteil der Tragkonstruktion und übernimmt die wesentlichen Lasten der darüber angeordneten Fahrzeug-Komponenten, wie Antriebseinheit.

Die Moduleinheiten können z.B. über Kupplungsvorrichtungen bzw. Modulkupplungsvorrichtungen, die beispielsweise an den Querträgern angebracht oder angeformt sind, aneinandergefügt sein. Unter Modulkupplungsvorrichtung ist im obigen Zusammenhang eine Ein-bzw. Vorrichtung zum lösbaren Verbinden von gesonderten Einheiten insbesondere Moduleinheiten zu verstehen.

Die erfindungsgemässe Konstruktion eignet sich sowohl z.B. für kleine Fahrzeuge bis 3,5 t (Tonnen) Gesamtgewicht als auch für grosse Fahrzeuge, insbesondere Nutzfahrzeuge, wobei unter Nutzfahrzeuge Strassenfahrzeuge mit mehr als 3,5 t Gesamtgewicht, wie z.B. Busse, Omnibusse, Lastkraftwagen (Lkw) oder Sattelzugmaschinen, gemeint sind. Die erfindungsgemässe Konstruktion eignet sich besonders bevorzugt für Nutzfahrzeuge, welche eine Fahrerkabine enthalten, und welche ein Leergewicht von 3,5 - 7 t aufweisen.

Die Antriebsmoduleinheit enthält vorzugsweise zwei parallel in Abstand angeordnete Querträger. Ein vorderer Querträger ist zur Fahrerhausmoduleinheit hin und ein rückwärtiger Querträger ist zur Lastentragmoduleinheit hin angeordnet. Die Antriebseinheit wird im wesentlichen von den Querträgern getragen. Sie ist vorteilhaft über Federelemente bzw. elastische Elemente, wie hydraulische Federelemente, Elastomerfederungen, vorzugsweise Silentblöcke, auf den Querträgern oder auf an diesen angebrachten Anbauteilen, wie z.B. Konsolen, gelagert. Die Antriebseinheit ist bevorzugt über eine Mehrpunkt-Lagerung auf die Querträger abgestützt. Weiters können Lenkungselemente, wie Spurstangen, an die Querträger angebracht sein.

Zwischen den Querträgern können Verbindungselemente wie Längsprofile oder Längsstreben angeordnet sein, welche die Querträger miteinander verbinden und zusammen mit den Querträgern eine biegesteife Rahmenstruktur ausbilden. Die Verbindungselemente sind zweckmässig zur Aufnahme von Zug- und Stosskräften bzw. als Anbauplattform für Anbauteile z.B. zur Aufnahme von Hydraulik- und/oder Elektroleitungen und dergl. konzipiert.

Die Querträger und/oder Verbindungselemente sind vorteilhaft Ein- oder Mehrkammerhohlprofile z.B. aus Eisen, verzinktem Eisen, Stahl und vorzugsweise Strangpressprofile aus Aluminium oder seinen Legierungen. Die Querträger und/oder Verbindungselemente können auch aus Kunststoff, insbesondere aus faserverstärktem Kunststoff, auch Faserverbundmaterial genannt, bestehen. Möglich sind auch Verbunde der vorgenannten Werkstoffe, insbesondere Metall-Kunststoffverbunde.

Kunststoffe können sowohl Thermoplaste, wie Polyolefine, Polyethylene und Polypropylene, Polyester, Polyvinylchlorid (PVC), Polystyrole, Polyamide oder Polycarbonate (PC) als auch Duroplaste, wie Epoxidharze, sein.

Als Verstärkungsfasern können insbesondere anorganische Fasern, wie Glasfasern, Kohlenstoff- oder Graphitfasern, Metallfasern (Draht), keramische Fasern oder Fasern aus Cellulosederivaten oder aus thermoplastischen Kunststoffen, wie z.B. Polyvinylchloride, Polyacrylonitrile, Polyacryle, Polyolefine, z.B. Polypropylen, Polyester, Polyamide oder Kunststofffasern bekannt unter Kevlar bzw. Aramid, etc., oder Naturfasern, wie faserartige Silikatminerale, Jute, Sisal, Hanf, Baumwolle, Ramiefasem, etc., oder Mischfasern davon verwendet werden.

Die Fasern werden zweckmässig in Form von textilen Flächengebilden, z.B. Vliese, nichtmaschenbildende Systeme, wie Gewebe, uni- oder bidirektionale Gelege, Geflechte oder Matten usw. oder z.B. maschenbildende Systeme, wie Gestricke oder Gewirke usw., verwendet.

Der Querträger weist aussen liegende Befestigungsebenen auf, welche zweckmässig Nuten, insbesondere hinterschnittene Nuten, Hinterschneidungen, Anformungen, Stege oder Rippen zur Befestigung von Anbauteilen beinhalten. Der Querträger enthält zweckmässig in jeder Befestigungsebene wenigstens eine Hinterschneidung, einen Steg oder eine Nute.

Hinterschnittene Nuten können z.B. zum Anbringen von selbsttragenden Baugruppen wie der Fahrerhausmoduleinheit bzw. der Frontpartie oder der Lastentragmoduleinheit sowie von Aufprall-Energie absorbierenden Bauteilen vorgesehen sein.

Die Fahrerhaus- und Lastentragmoduleinheit sind zweckmässig über die der Antriebsmoduleinheit zugewandten Stirnwandseite an den Querträger der Antriebsmoduleinheit befestigt. Die Befestigung erfolgt vorteilhaft über eine Kaltverbindung, insbesondere eine Schraubverbindung. Dazu werden in die hinterschnittene Nut Klemmplättchen oder Nutensteine mit einem Innengewinde eingelegt, in welches Schrauben festgedreht werden, die wiederum das Anbauteil auf der anderen Seite halten.

Der Anschluss der Fahrerhaus- oder Lastentragmoduleinheit an die Antriebsmoduleinheit erfolgt vorzugsweise über Kaltverbindungen, wie Nieten, Schrauben, Klemmen. Die Verbindung kann auch Schweiss- und/oder Klebverbindungen enthalten. Dabei sind bezüglich Verbindungstechnik vorteilhaft klare Trennlinien zwischen den einzelnen Moduleinheiten und Werkstoffarten, die ein späteres Recycling kostengünstig beeinflussen, vorgesehen.

Die Querschnittsform des Querträgers ist vorzugsweise über die gesamte Längsausdehnung uniform. Örtliche Abweichungen im Querschnitt, beispielsweise durch entfernen von Stegen oder Anbringen von Löchern oder Ausnehmungen und dergl. für den Anbau untergeordneter Bauteile können vorgesehen sein.

An die Querträger können weiters Verbindungsschnittstellen zur Aufnahme der Enden von Überrollbügeln oder zum Anbringen einer Anbautafel mit Leitungskupplungen zum Anschliessen von Versorgungsleitungen angebracht sein. Unter Leitungskupplungen ist eine Ein- bzw. Vorrichtung zur lösbaren Verbindung von Versorgungsleitungen zu verstehen.

Die Antriebseinheit der Antriebsmoduleinheit beinhaltet beispielsweise einen Antriebsmotor, wie Elektro- Gas-, oder Verbrennungsmotor oder Kombinationen davon, sowie weitere dazu gehörige Komponenten wie z.B. Stromgenerator, Getriebe, Differential und fallweise auch die Energiebevorratung.

Die Antriebseinheit kann längs oder quer zur Fahrtrichtung angeordnet sein und kann zweckmässig im Bereich einer Achse vorgesehen sein, bzw. über einer Achse, vorzugsweise über einer vorderen Achse, angeordnet sein. Der Antrieb auf die Räder erfolgt, soweit nicht Radnabenmotoren vorgesehen sind, vorteilhaft über Kardanwelle und Differentialgetriebe.

In einer Ausführungsform ist vorgesehen, dass wenigstens an einer Achse der Lastentragmoduleinheit ein Ergänzungsmotor, beispielsweise ein Elektromotor angeordnet ist. Der Ergänzungsmotor wird über eine Versorgungsleitung von der Antriebseinheit mit Energie versorgt. Es kann beispielsweise vorgesehen sein, dass die Antriebseinheit einen Verbrennungsmotor und einen damit angetriebenen Stromgenerator enthält, welcher die elektrische Energie für einen elektrischen Ergänzungsmotor als Achsantrieb, insbesondere als Hinterachsantrieb, erzeugt.

Der Anschluss von Versorgungsleitungen zur Antriebsmoduleinheit erfolgt vorteilhaft über Leitungskupplungen, wodurch gewährleistet wird, dass beim Trennen bzw. Zusammenbau der Moduleinheiten die Versorgungsleitungen problemlos getrennt bzw. verbunden werden können.

Batterien und Brennstoffzellen, die einen hohen Platzbedarf beanspruchen, können unabhängig von der Antriebseinheit beispielsweise am Fahrgestellrahmen der Lastentragmoduleinheit angeordnet sein.

Die Antriebsmoduleinheit kann weiters auch Elektronik, Klimaanlage und beispielsweise eine Ruhe- und/oder Schlafnische enthalten.

An dem oder den Querträgern der Antriebsmoduleinheit können quer zur Fahrzeuglängsrichtung angeordnete ring-, bügel- oder bogenförmige Profilkonstruktionen befestigt sein. Die Profilkonstruktionen können in ihrer maximalen Breitenausdehnung Fahrzeugbreite erreichen und in ihrer maximalen Höhenausdehnung bis zum Fahrzeugdach reichen. Die genannten Profilstrukturen können unter anderem als Anschlussschnittstellen für die Fahrerhaus- und/oder Lastentragmoduleinheit vorgesehen sein. Sie können auch als Überrollbügel sowie zur Aufnahme von Anbauteilen ausgebildet sein.

Des weiteren können auch die Lastentragmoduleinheit und/oder Fahrerhausmoduleinheit, wenigstens an ihrer der Antriebsmoduleinheit zugewandten Stirnseite eine vorgenannte Profilstruktur enthalten, welche gegengleich zur entgegen liegenden Profilstruktur der Antriebsmoduleinheit ist. Die einzelnen Moduleinheiten können in dieser Weise durch fügen der einander anliegenden Profilstrukturen verbunden werden.

Die genannten Profilstrukturen einer Moduleinheit können über Längsprofile in Fahrzeuglängsrichtung miteinander verbunden sein.

Zur gegenseitigen Verbindung der Moduleinheiten kann die Antriebsmoduleinheit an ihren Stirnseiten des weiteren auch Vertikal-, Horizontal-, oder Schrägprofile enthalten.

In einer besonderen Ausführungsvariante enthält die Antriebsmoduleinheit eine Überrollvorrichtung, welche beim Überrollen des Fahrzeuges Stoss- bzw. Aufprallkräfte aufnimmt und ableitet und z.B. die Beschädigung bzw. Deformation des Fahrerhauses und der Antriebseinheit verhindert oder reduziert. Die Überrollvorrichtung enthält vorzugsweise eine oder mehrere bügelartige Profilkonstruktionen, sogenannte Überrollbügel, welche mit ihren bodenwärtigen Endbereichen an die Querträger, insbesondere an die Endabschnitte der Querträger, befestigt und quer zur Fahrzeuglängsrichtung angeordnet sind.

Ein Überrollbügel enthält zweckmässig seitliche und vertikal ausgerichtete, endseitig, beispielsweise über Zwischenanbauteile, an einen Querträger angeordnete Profile, welche dachwärtig durch ein oder mehrere horizontal oder schräg ausgerichtete Profile zu einem Bügel verbunden sind. Der Überrollbügel kann weiters auch aus einem, zwei oder mehreren gebogenen Profilteilen bestehen.

Die Überrollvorrichtung enthält vorzugsweise zwei Überrollbügel, welche an einem vorderen bzw. rückwärtigen Querträger befestigt sind. Die Überrollvorrichtung kann weiters Bügellängsprofile als Verbindungsprofile zwischen den Überrollbügeln enthalten. Die Bügellängsprofile können als Aufprall-Energie absorbierende Elemente, als sogenannte Crash-Elemente, ausgebildet sein, die unter Einwirkung von starken, in Fahrzeuglängsrichtung wirkenden Kräften, wie Aufprallkräfte, gestaucht bzw. gefaltet und permanent oder temporär verkürzt werden und einwirkende Kräfte absorbieren.

Die ring-, bügel-, oder bogenförmigen Profilstrukturen, insbesondere die Überrollbügel, und Längsprofile, insbesondere die Bügellängsprofile sind z.B. U-, oder T-förmige Profile oder Ein- oder Mehrkammerhohlprofile z.B. aus Eisen, verzinktem Eisen, Stahl und vorzugsweise Strangpressprofile aus Aluminium oder seinen Legierungen. Die genannten Profilstrukturen, insbesondere Überrollbügel, und Bügellängsprofile und können auch aus Kunststoff, insbesondere aus vorstehend beschriebenem, faserverstärktem Kunststoff bestehen. Faserverstärkte Kunststoffe sind in diesem Text auch als Faserverbundteile bzw. -materialien benannt. Möglich sind auch Verbunde der vorgenannten Werkstoffe, insbesondere Metall-Kunststoff-Verbunde.

Die genannten Profilstrukturen und insbesondere die Überrollbügel und/oder Bügellängsprofile können ebenfalls Nuten, insbesondere hinterschnittene Nuten, Anformungen, Stege, Rippen oder Fahnen zur Befestigung von Anbauteilen oder Baugruppen enthalten.

Zwischen Antriebseinheit und den Überrollbügeln ist in Fahrzeuglängsrichtung vorzugsweise ein Abstand angeordnet, welcher gewährleistet, dass beim Stauchen bzw. Verkürzen der Bügellängsprofile die Antriebseinheit nicht oder nur geringfügig beschädigt wird.

Die Fahrerhausmoduleinheit kann über entsprechende Verbindungsschnittstellen am vorderen Querträger und/oder Überrollbügel angebracht sein. Die Lastentragmoduleinheit kann ebenfalls über entsprechende Verbindungsschnittstellen am hinteren Querträger und/oder Überrollbügel angebracht sein.

Die entsprechenden Verbindungsmittel bzw. Verbindungsflächen, wie Stege oder Flansche, der Fahrerhausmoduleinheit und insbesondere der Lastentragmoduleinheit können auf dem Querträger bzw. auf einer Auflagefläche am Querträger oder auf einem Zwischenanbauteil am Querträger aufliegen, so dass Vertikalkräfte auf eine Fläche verteilt wirken und sich nicht ausschliesslich auf Verbindungspunkte, wie Schraub- oder Nietverbindungen, konzentrieren.

Der rückwärtige Querträger kann ebenfalls als Aufprall-Energie absorbierendes Element ausgebildet sein, wobei dieses zweckmässig zur Aufnahme der Aufprall-Energie von sich, durch ein Bremsmanöver oder einen Zusammenstoss, gegen die frontseitige Bordwand der Lastentragmoduleinheit verschiebende Fracht dient. Dazu sind in die Hohlkammer oder Hohlkammern des rückwärtigen Querträgers Stoss absorbierende Elemente, auch Deformations-Elemente genannt, eingeführt, welche einwirkende Kräfte in Fahrzeuglängsrichtung durch Eigenverformung aufnehmen.

Deformations-Elemente können z.B. Hohlkörper und insbesondere hohlzylinderförmig ausgebildete Körper aus Aluminium oder seinen Legierungen oder Elemente mit Wabenstrukturen sein. Die Hohlzylinderkörper sind zweckmässig mit ihrer Zylinderachse quer zur Längsrichtung des Querträgers im Hohlraum des Querträgers angeordnet und werden beispielsweise in Zylinderachs-Richtung gefaltet. Die Elemente können auch Schaumkörper aus grobzelligem Kunststoff sein, die in die Hohlkammer des Querträgers eingeschäumt oder eingeführt sind, wobei die Schaumkörper in ihrer Wirkungsrichtung unterschiedliche Dichten aufweisen können.

Es kann z.B. eine Achse im vorderen Fahrzeugbereich als Starrachse vorgesehen sein. Die Achse oder die Aufhängungsteile sind zweckmässig über Federelemente wie Schraubenfedern, Luftfedern und/oder Längsblattfedern am Querträger oder den Querträgern befestigt.

Für die Verbindungsstellen sind an den Querträgern z.B. Konsolen als Anbauteile vorgesehen. Um die ungefederte Masse gering zu halten, ist der Antrieb vorteilhaft vollständig von der Achse getrennt angeordnet und auf dem oder den Querträgern abgestützt.

In einer weiteren Ausführungsvariante kann auch eine Einzelradaufhängung im vorderen Fahrzeugbereich, insbesondere in der Antriebsmoduleinheit, vorgesehen sein, wobei in dieser Anordnung die Radaufhängungsorgane vollständig oder teilweise und fallweise auch die Federelemente an den Querträgern befestigt sind.

Es können des weiteren eine oder mehrere Achsen des erfindungsgemässen Fahrzeuges individuell lenkbar sein.

Die Antriebsmoduleinheit ist zweckmässig mit einer entsprechend lärm- und wärmedämmenden Aussenverkleidung versehen, welche z.B. an die genannten Profilstrukturen und insbesondere an die Überrollvorrichtung befestigt ist.

Die Lastentragmoduleinheit, mit oder ohne Fahrgestellrahmen, enthält zweckmässig einen Aufbau, beispielsweise einen Pritschen- oder Kastenaufbau. Die Lastentragmoduleinheit kann federnd auf die zugehörigen Achsen abgestützt oder über Radaufhängungsorgane mit den Rädern verbunden sein.

Es können, insbesondere bei der Lastentragmoduleinheit, eine oder mehrere Achsen mit einfach oder Zwillingsbereifung vorgesehen sein.

Des weiteren kann auch die Fahrerhausmoduleinheit neben einem Fahrerhaus wenigstens eine Achse enthalten.

Weiters kann vorgesehen sein, dass das Fahrzeug mehrere beispielsweise nacheinander angeordnete Antriebsmoduleinheiten und/oder mehrere beispielsweise nacheinander angeordnete Lastentragmoduleinheiten enthält.

Das erfindungsgemässe Fahrzeug erlaubt es, den Herstellungsaufwand zu reduzieren. Durch den Verzicht auf durchgehende Rahmenlängsträger kann eine Gewichtsreduktion erreicht werden und die Antriebseinheit kann quer zur Fahrzeuglängsrichtung angeordnet werden. Der modulare Aufbau erlaubt die gesonderte Herstellung einzelner Moduleinheiten, wobei insbesondere die technisch weniger anspruchsvollen Moduleinheiten, z.B. Fahrerhausmoduleinheiten, vor Ort hergestellt werden können. Der grösste Teil der Technik ist auf die Antriebsmoduleinheit konzentriert, welche an einer zentralen Fertigungsstelle von hochqualifizierten Fachkräften hergestellt werden kann. Die Lastentragmoduleinheit kann in ihren Dimensionen, insbesondere in der Länge, in beliebigem Masse variieren, ohne dass grössere, kostspielige Änderungen in der Antriebsmoduleinheit notwendig sind.

Diese Modulweise erlaubt, dass pro Quadratmeter-Montagefläche ein qualitativer, höherer Nutzungsgrad möglich ist.

Weiters ergeben sich durch die Modulbauweise kürzere Bauteile in Bezug auf das Verhältnis Fahrzeuglänge zur Fahrzeugbreite. Die Modulbauweise erlaubt zudem die beliebige Kombination von einzelnen Moduleinheiten, was z.B. bei auszuführenden Reparaturarbeiten an einer einzelnen Moduleinheit, bei Umbau von Fahrzeugen z.B. Änderung des Antriebsstranges, z.B. der Luft- oder Treibstoffleitungen, oder bei Änderung des Designs von Fahrerhauskabinen bei neuen Fahrzeugserien Anwendung finden kann.

Im folgenden wird die Erfindung beispielhaft und mit Bezug auf die beiliegenden Zeichnungen näher erläutert. Es zeigen:
- Fig. 1:: eine Seitenansicht eines Fahrzeuges;
- Fig. 2:: eine Seitenansicht einer Antriebsmoduleinheit;
- Fig. 3a-d:: eine Querschnittsansicht eines Querträgers;
- Fig. 4a-b:: eine perspektivische Ansicht eines Querträgers mit Anbauteil;
- Fig. 5a-b:: eine Querschnittsansicht eines Querträgers mit Federelement;
- Fig. 6a:: einen Querschnitt eines Querträgers mit Stoss absorbierenden Elementen;
- Fig. 6b:: einen Längsschnitt entlang A-A gemäss Fig. 6a;
- Fig. 7-8:: eine perspektivische Ansicht eines weiteren Querträgers mit Anbauteilen.

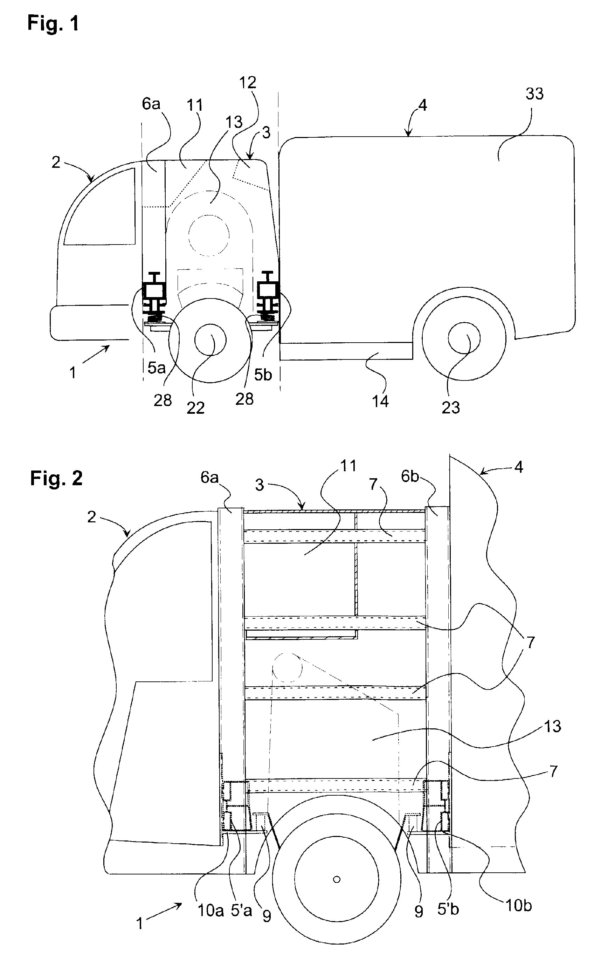

Das Fahrzeug 1 in Fig. 1 enthält eine Antriebsmoduleinheit 3, an welche über Verbindungsschnittstellen (nicht gezeigt) eine Fahrerhausmoduleinheit 2 und eine Lastentragmoduleinheit 4 mittels Kaltverbindungen angeschlossen sind.

Die Antriebsmoduleinheit 3 enthält eine über der vorderen Achse angeordnete Antriebseinheit 13 mit einem Antrieb, einem Getriebe und einem Generator zur Stromerzeugung. Durch den modularen Aufbau des Fahrzeuges bedingt, enthält das Fahrzeug 1 keine durchgehenden Fahrgestell-Längsträger. Die Antriebseinheit 13 ist über Federelemente an einem in Fahrzeuglängsrichtung vor bzw. hinter einer Achse 22 angeordneten vorderen und rückwärtigen Querträger 5a, 5b befestigt. Am vorderen Querträger 5a ist weiters ein Überrollbügel 6a in Form eines U-Profiles quer zur Fahrzeuglängsrichtung befestigt.

Die Antriebsmoduleinheit 3 beinhaltet weiters eine Ruhe- oder Schlafnische 11, die wenigstens teilweise unter dem Überrollbügel 6a im vorderen, dachwärtigen Bereich der Antriebsmoduleinheit 3 angeordnet ist, sowie Klima-Anlage und Elektronik 12. Batterie und Betriebsstoff 14 sind separat an einem Fahrgestellrahmen der Lastentragmoduleinheit 4 angebracht.

In Fig. 2 sind an die seitlichen Endabschnitte des vorderen und rückwärtigen Querträgers 5'a, 5'b ein vorderer bzw. rückwärtiger Überrollbügel 6a, 6b befestigt. Die beiden Überrollbügel 6a, 6b sind weiters über Bügellängsprofile 7 verbunden und bilden gemeinsam einen biegesteifen Überrollkäfig. Sowohl die Fahrerhaus- 2 und Lastentragmoduleinheit 4 als auch die Antriebseinheit 13 sind über vordere und rückwärtige Zwischenanbauteile 10a, 10b mit den Querträgern 5'a, 5'b verbunden. Weitere Befestigungspunkte, gegebenenfalls auch über Zwischenanbauteile, zur Aufnahme von Anbauteilen befinden sich an den Überrollbügeln 6a, 6b (nicht gezeigt).

Die Bügellängsprofile 7 sind in einer speziellen Ausführungsvariante als Energie absorbierende Elemente ausgebildet, d.h. sie sind als sogenannte Crash-Elemente ausgebildet, die bei einem Zusammenstoss mit in Fahrzeuglängsrichtung wirkenden Aufprallkräften gefaltet oder gestaucht werden und bei diesem Vorgang Aufprall-Energie absorbieren.

Die Antriebsmoduleinheit 3 beinhaltet weiters eine Ruhe- oder Schlafnische 11, die im wesentlichen innerhalb der Überrollvorrichtung angeordnet ist, sowie die Klima-Anlage und Elektronik 12.

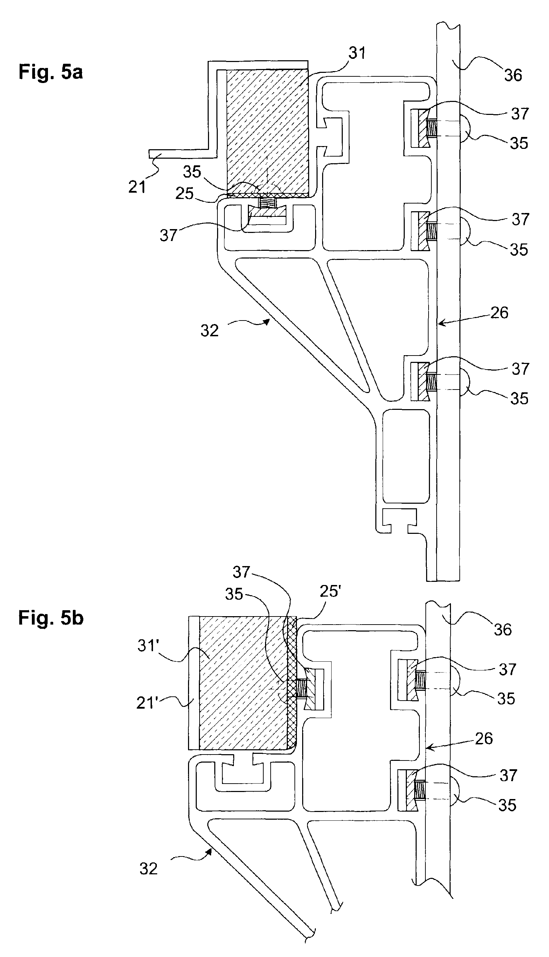

Die Antriebseinheit 13 ist über Elastomer-Federungen 9 (siehe auch Fig. 5a, 5b) federnd auf den Querträgern 5'a, 5'b befestigt.

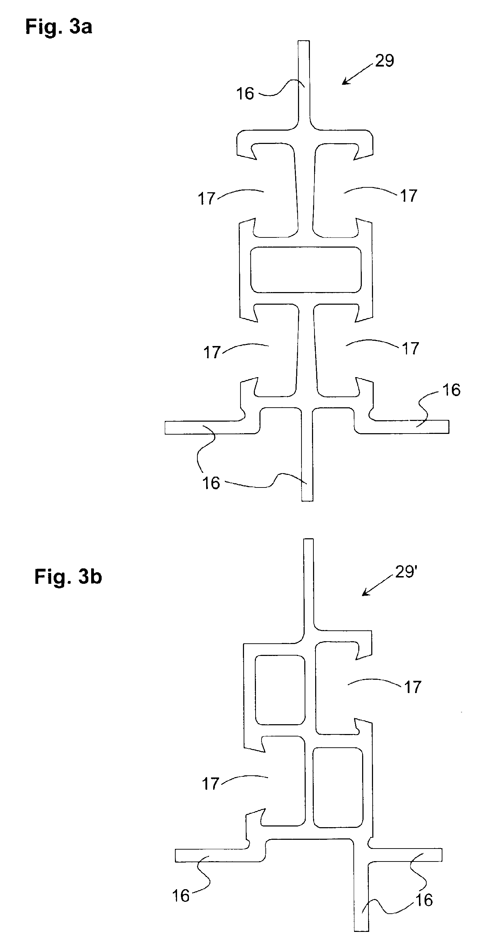

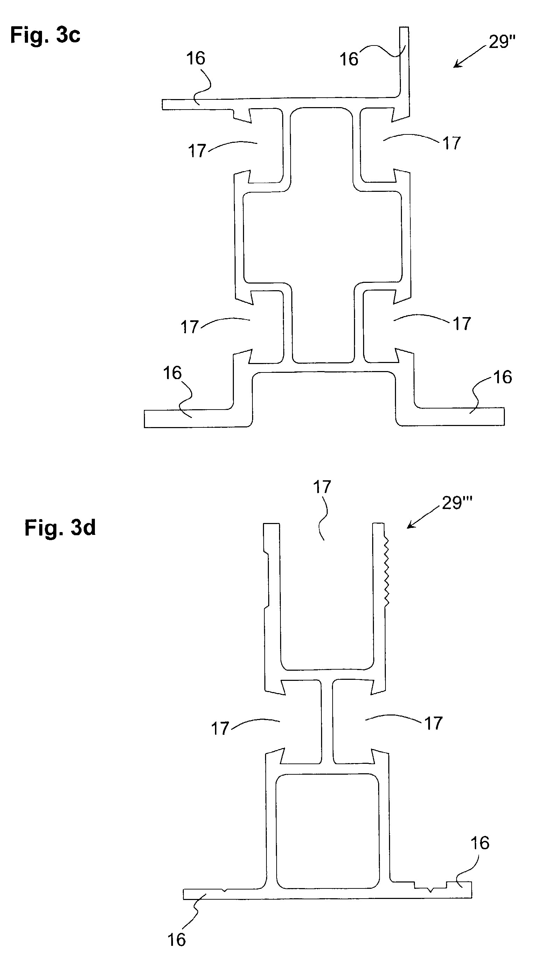

Verschiedene Querschnittsformen von möglichen Querträgern sind in Fig. 3a-d dargestellt. Die Querträger 29, 29', 29", 29"' sind stranggepresste Einfach- oder Mehrfachhohlprofile aus Aluminium oder seinen Legierungen. Sie enthalten an ihren jeweiligen Befestigungsebenen wenigstens eine Befestigungsnut 17, insbesondere eine hinterschnittene Nut, und/oder einen Steg bzw. Anformung 16 zur Befestigung von Anbauteilen.

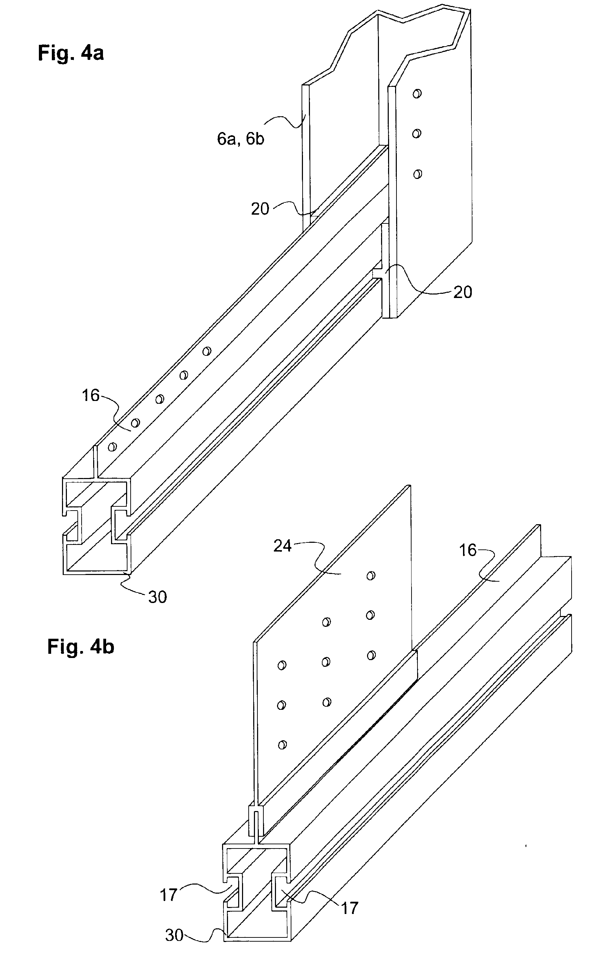

Die Befestigung der Überrollbügel 6a, 6b ist in einer Detaillösung in Fig. 4a dargestellt, wobei die Zeichnung lediglich den Verbindungsausschnitt zeigt. Der Überrollbügel (6a, 6b) ist über Zwischenanbauteile 20 mittels Formschlussverbindung an den Endabschnitten des Querträgers 30 befestigt.

An den Querträger 30 werden weitere untergeordnete Anbauteile wie Anbautafeln 24 mit Leitungskupplungen für den Anschluss von Versorgungsleitungen zwischen Antriebsmoduleinheit 3 und Lastentragmoduleinheit 4 bzw. Fahrerhausmoduleinheit 2 angebracht (siehe Fig. 4b). Die Anbautafel 24 kann beispielsweise auf einen Steg 16 des Querträgers 30 aufgesteckt und mittels Klemmverbindung arretiert sein.

Die Antriebseinheit wird gemäss den Detaillösungen nach Fig. 5a, 5b von Zwischenanbauteilen 21, 21' getragen, welche unter anderem über Elastomer-Federlagen 31, 31' federnd an den Querträger 32 befestigt sind. Die Elastomer-Federlagen 31, 31' enthalten Basisplatten 25, 25' und sind über diese an den Querträger 32 geschraubt, wobei die Verschraubung, wie vorgängig beschrieben, über Klemmplättchen in hinterschnittenen Nuten erfolgt. Die Fahrerhaus- 2 bzw. Lastentragmoduleinheit 4 wird über Zwischenanbauteile 36 (schematisch dargestellt) an die Anbauebene 26 der Querträger 32 angebracht. Die Zwischenanbauteile 36 sind über Schrauben 35, welche in die Innengewinde von in hinterschnittene Nuten eingeführten Klemmplättchen 37 gedreht werden und diese arretieren und in der Nut verklemmen, an die Anbauebene 26 der Querträger 32 angebracht.

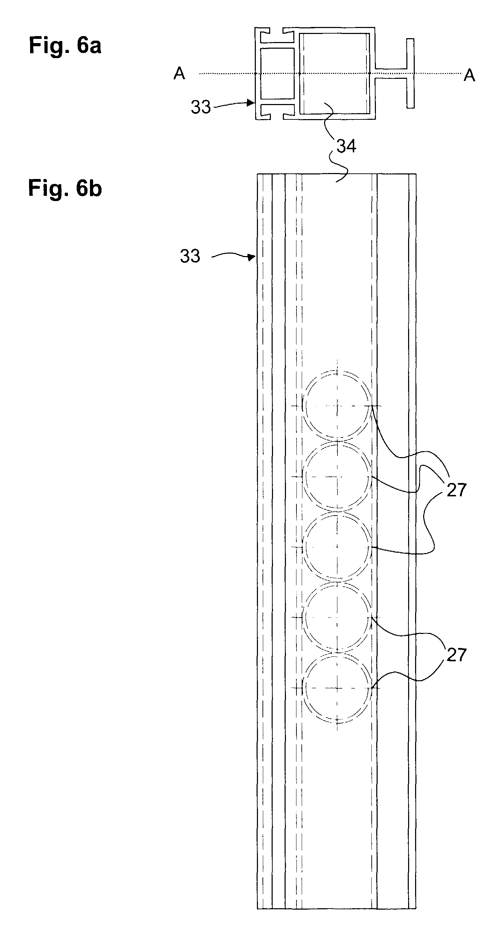

In einer weiteren Detaillösung wird der rückwärtige Querträger 33 mit Energie absorbierenden Elementen, sogenannten Crash-Elementen, ausgerüstet (siehe Fig. 6a, 6b). Die Crash-Elemente sind in der Hohlkammer 34 des als Hohlprofil ausgebildeten Querträgers 33 angeordnete Hohlzylinderkörper 27 aus einer Aluminiumlegierung. Die Hohlzylinderkörper 27 werden bei einem Aufprall in Richtung Zylinderachse gefaltet bzw. gestaucht.

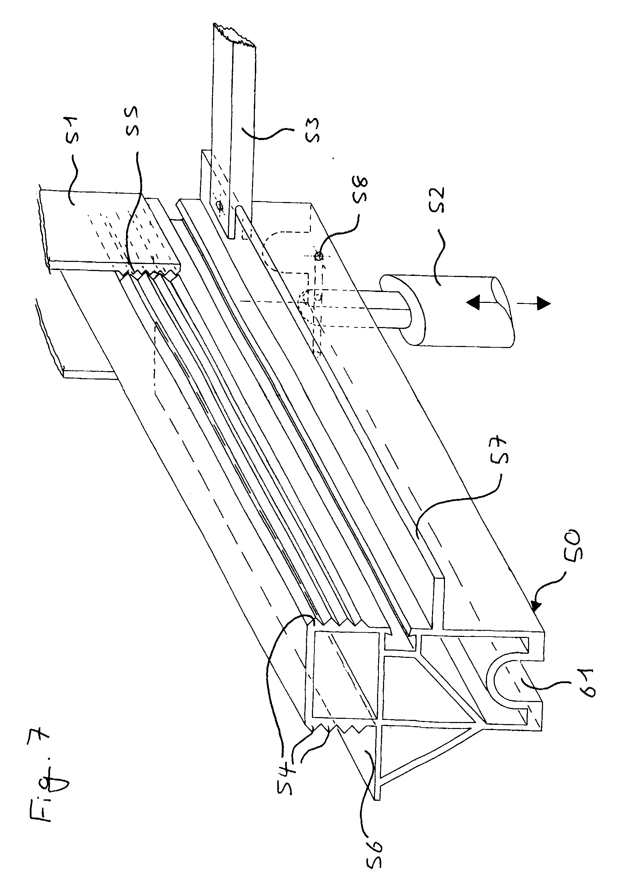

Eine weitere Ausführung eines Querträgers 50 ist in Fig. 7 gezeigt. An der bodenwärtigen Seite verfügt der Querträger 50, welcher als stranggepresstes Mehrkammerhohlprofil aus Aluminium gefertigt ist, eine in Längsrichtung des Querträgers 50 verlaufende Rundnut 61. Die Rundnut 61 dient unter anderem zur Befestigung eines Stossdämpfers 52, wobei dieser mit seinem ein Augen- oder Stiftgelenk enthaltenden Endabschnitt in die Rundnut 61 eingreift und mittels einer quer zur Rundnut 61 verlaufenden Schraub- oder Stiftverbindung 58 mit dem Querträger 50 verbunden ist. Der Stossdämper ist mit seiner anderen Seite auf die Achse abgestützt (nicht gezeig).

An einem Steg 57 ist ein Verbindungselement in der Ausbildung einer Verbindungsstrebe 53 angebracht, welche den Querträger 50 mit einem weiteren parallel verlaufenden Querträger verbindet (nicht gezeigt).

Der Querträger 50 weist vertikale Anschlussflächen mit in Längsrichtung des Querträgers 50 verlaufenden zackenförmig ausgebildeten Leisten 54 auf. Ein Zwischenanbauteil 51 weist an seiner dem Querprofil 50 zugewandten Seite ebenfalls parallel in Längsrichtung des Querträgers 50 verlaufenden zackenförmige Leisten 55 auf, wobei die zackenförmigen Leisten 55 des Zwischenanbauteils 51 in vorliegender Ausführung in engerer Anordnung sind als die zackenförmigen Leisten 54 des Querträgers 50. Das Zwischenanbauteil 51 ist über eine Klebverbindung mit dem Endabschnitt des Querträger 50 verbunden, wobei die die zackenförmigen Leisten 54, 55 enthaltenden Flächen des Zwischenanbauteils 51 und des Querträgers 50 mit Klebstoff beaufschlagt und gegenseitig gefügt sind. Die genannten Flächen sind mit ihren zackenförmigen Leisten gegenseitig verhakt, was sich verstärkend auf die Bauteilverbindung insbesondere bezüglich auf das Zwischenanbauteil 51 wirkenden Vertikalkräfte auswirkt.

Der Querträger 50 weist des weiteren eine Balkon 56 zur Aufnahme weiterer Anbauteile auf. Der Balkon 56 ist im Endabschnitt des Querträgers 50 ausgeschnitten, dies wegen des Anschlusses des Zwischenanbauteils 51 und dem daran befestigten Überrollbügel (nicht gezeigt).

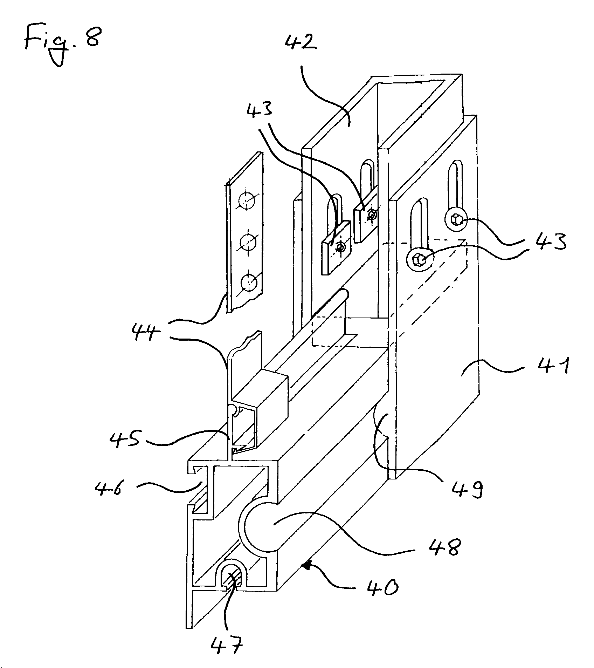

Fig. 8 zeigt eine weitere Variante eines Querträgers 40 mit Anbauteilen. Am Endabschnitt des Querträgers 40 ist wiederum ein Zwischenanbauteil 41 angebracht, wobei das Zwischenanbauteil 41 einen in Längsrichtung des Querträgers 40 verlaufenden halbkreisförmigen Wulst 49 aufweist, welcher in eine in Längsrichtung des Querträgers 40 verlaufende Rundnut 48 eingreift, wodurch sich eine stützende Verbindung bezüglich auf das Zwischenanbauteil 41 wirkende Vertikalkräfte ergibt. Die Rundnut 48 weist eine geringe Hinterschneidung auf. Ein Überrollbügel 42 ist mittels Schraubverbindung 43 mit dem Zwischenanbauteil 41 verbunden, wobei die Schrauben durch vertikale Schlitzöffnungen im Zwischenanbauteil 41 und im Überrollbügel 42 führen und auf ihrer freien Seite mit Schraubenmuttern fixiert sind. Der Überrollbügel 42 liegt mit seinem stirnseitigen Endfläche auf einem Dämpfungselement 60 aus Kunststoff auf, welches mittels Klebverbindung am Querträger 40 angebracht ist. Das Dämpfungselement 60 dient zur Absorption von auf den Überrollbügel 42 einwirkenden vertikalen Stössen.

Der Querträger 40 enthält weiters einen Steg 45 mit einer in Längsrichtung des Querträgers 40 verlaufenden wulstartigen Anformung und Hakenelement. Der Steg mit seinen Anformungen ist Teil einer Klemmverbindung, welche eine Anbautafel 44 zum Anschluss von Verbindungsleitungen aufnimmt. Der Steg ist im Endabschnitt des Querträgers 40 ausgeschnitten.

Des weiteren enthält der Querträger 40 eine in Längsrichtung des Querträgers 40 verlaufende hinterschnittene Nut 46 bzw. hinterschnittene Rundnut 47 zur Aufnahme weiterer Anbauteile.

## Patentansprüche

1. Fahrzeug für Lasten- und/oder Personentransporte enthaltend einen Fahrerhausbereich und einen Nutzlast- oder Personentransportanbau,
dadurch gekennzeichnet, dass
das Fahrzeug (1) eine Konstruktion aus gesonderten, gegenseitig gefügten Moduleinheiten (2, 3, 4), enthaltend wenigstens eine Fahrerhausmoduleinheit (2), wenigstens eine Lastentragmoduleinheit (4), welche wenigstens eine Achse (23) enthält, und wenigstens eine zwischen einer Fahrerhausmoduleinheit (2) und einer Lastentragmoduleinheit (4) angeordnete Antriebsmoduleinheit (3), welche eine Antriebseinheit (13) und eine Achse (22) enthält, aufweist.

2. Fahrzeug nach Anspruch 1, dadurch gekennzeichnet, dass das Fahrzeug (1) eine Konstruktion aus gesonderten, gegenseitig gefügten Moduleinheiten (2, 3, 4) besteht und die Moduleinheiten (2, 3, 4) eine Fahrerhausmoduleinheit (2), eine Lastentragmoduleinheit (4) und eine zwischen der Fahrerhausmoduleinheit (2) und der Lastentragmoduleinheit (4) angeordnete Antriebsmoduleinheit (3) umfassen und die Antriebsmoduleinheit (3) wenigstens eine, vorzugsweise genau eine Achse (22) enthält und die Lastentragmoduleinheit (4) wenigstens eine Achse (23) enthält.

3. Fahrzeug nach Anspruch 1, dadurch gekennzeichnet, dass die Antriebsmoduleinheit (3) wenigstens einen, vorzugsweise einen vorderen und rückwärtigen, Querträger (5a, 5b) enthält und die Antriebseinheit (13) auf die Querträger abgestützt ist und die Querträger (5a, 5b) auf die Achse abgestützt sind.

4. Fahrzeug nach Anspruch 1, dadurch gekennzeichnet, dass die Antriebsmoduleinheit (3) ein oder mehrere Querträger (5a, 5b) enthält und die Antriebseinheit (13) über der Achse (22) angeordnet und über Federelemente (9) auf einem oder mehreren Querträgern (5a, 5b) oder auf Zwischenanbauteilen (10a, 10b) an den Querträgern (5a, 5b) gelagert ist, und Mittel (28) zur federnden Abstützung der Querträger (5a, 5b) auf die Achse (22) vorhanden sind und die Querträger (5a, 5b) Ein- oder Mehrkammerhohlprofile, vorzugsweise Strangpressprofile aus Aluminium, oder aus einem Faserverbundmaterial sind, und die Fahrerhaus- (2) und/oder Lastentragmoduleinheit (4) über Verbindungsschnittstellen am Querträger (5a, 5b) mit der Antriebsmoduleinheit (3) verbunden sind.

5. Fahrzeug nach Anspruch 1, dadurch gekennzeichnet, dass die Antriebsmoduleinheit (3) vor und hinter der Achse (22) einen vorderen und einen rückwärtigen Querträger (5a, 5b) enthält, und die Querträger (5a, 5b) über Verbindungselemente (53) zu einem Rahmen verbunden sind und die Antriebseinheit (13) im Bereich zwischen den Querträgern (5a, 5b) angeordnet ist, und vorzugsweise über eine Mehr-Punkt-Elastomer-Lagerung auf den Querträgern (5a, 5b) und/oder den Verbindungselementen aufliegt.

6. Fahrzeug nach Anspruch 1, dadurch gekennzeichnet, dass die Querträger (5) Befestigungsebenen aufweisen, vorzugsweise Befestigungsebenen gegen Fahrerhaus- und Lastentragmoduleinheit, und die Befestigungsebenen wenigstens Nuten (17), vorzugsweise hinterschnittene Nuten, Anformungen, Stege (16), oderHinterschneidungen enthalten.

7. Fahrzeug nach Anspruch 1, dadurch gekennzeichnet, dass die Fahrerhaus- (2), die Lastentrag- (4) und vorzugsweise die Antriebsmoduleinheit (3) an ihren den anderen Moduleinheiten zugewandten Stirnseiten ring-, bügel- oder bogenförmige Profilstrukturen enthalten und die Moduleinheiten über die ring-, bügel- oder bogenförmige Profilstrukturen miteinander verbunden sind.

8. Fahrzeug nach Anspruch 1, dadurch gekennzeichnet, dass an den Endabschnitten der Querträger (5a, 5b) wenigstens ein Überrollbügel (6a, 6b) quer zur Fahrzeuglängsrichtung angebracht ist und ein vorderer Querträger (5a) und vorderer Überrollbügel (6a) Mittel zur Befestigung der Fahrerhausmoduleinheit (2) aufweisen und ein rückwärtige Querträger (5b) und rückwärtige Überrollbügel (6b) Mittel zur Befestigung der Lastentragmoduleinheit (4) beinhalten und die Überrollbügel (6a, 6b) durch Bügellängsprofile (7), vorzugsweise aus Aluminium-Strangpresshohlprofilen oder Faserverbundteilen, miteinander verbunden sind.

9. Fahrzeug nach Anspruch 8, dadurch gekennzeichnet, dass die Bügellängsprofile (7) als Stoss absorbierende Elemente in Form von Hohlprofilen oder Hohlprofilen mit in dessen Hohlräumen eingelagerten Schaumstoffkörpern ausgebildet sind.

10. Fahrzeug nach Anspruch 1 und 8, dadurch gekennzeichnet, dass die Antriebsmoduleinheit (3) eine im dachwärtigen Bereich, vorzugsweise zwischen dem vorderen und rückwärtigen Überrollbügel (6a,6b), angeordnete Ruhe- und Schlafnische (11) enthält.

11. Fahrzeug nach Anspruch 1, dadurch gekennzeichnet, dass die Versorgungsleitungen der Antriebsmoduleinheit (3) und der Fahrerhaus- (2) und/oder Lastentragmoduleinheit (4) über Leitungskupplungen verbunden sind.

12. Fahrzeug nach Anspruch 1, dadurch gekennzeichnet, dass wenigstens eine Achse, insbesondere eine Achse (23) der Lastentragmoduleinheit (4), mit einem sekundären Antrieb, vorzugsweise mit einem Elektroantrieb ausgestattet ist und die Antriebsenergie und Steuerung des sekundären Antriebes über Versorgungsleitungen von der Antriebsmoduleinheit (3) erfolgt.

13. Fahrzeug nach Anspruch 1, dadurch gekennzeichnet, dass die Lastentragmoduleinheit (4) einen Aufbau (33), insbesondere einen Kasten- oder Pritschenaufbau und vorzugsweise einen unter dem Aufbau angeordneten Fahrgestellrahmen enthält.

14. Fahrzeug nach Anspruch 1, dadurch gekennzeichnet, dass eine oder mehrere Achsen individuell lenkbar sind.

15. Fahrzeug nach Anspruch 1, dadurch gekennzeichnet, dass die Moduleinheiten (2, 3, 4) gegenseitig mittels Kaltverbindungen, vorzugsweise mittels Schrauben, Klemmen, Nieten, trennbar verbunden sind.
